# EUROPÄISCHE PATENTSCHRIFT

(11) **EP 1 329 351 B1**
(45) Veröffentlichungstag und Bekanntmachung des Hinweises auf die Patenterteilung: **31.01.2007**
(21) Anmeldenummer: 02026555.9
(22) Anmeldetag: 28.11.2002
(51) Int. Cl.: B60K 5/10

(54) **Fahrzeug mit einem Antriebsmotor**
Vehicle with drive motor
Véhicule avec moteur d'entraînement

(30) Priorität: 18.01.2002 DE 10202060
(43) Veröffentlichungstag der Anmeldung: 23.07.2003
(73) Patentinhaber: Baur, Lutz, 88339 Bad Waldsee (DE)
(72) Erfinder: Baur, Lutz, 88339 Bad Waldsee (DE)
(74) Vertreter: Eisele, Otten, Roth & Dobler

(56) Entgegenhaltungen:
- EP-A- 0 244 549
- WO-A-00/27662
- AU-A- 3 205 877
- DE-A- 4 321 768
- DE-A- 4 427 322
- GB-A- 2 229 686
- US-A- 4 770 427

## Beschreibung

Die Erfindung betrifft eine Hybrid-Fahrersitz-Zugmaschine mit einem Antriebsmotor zum Antreiben wenigstens eines Laufrades des Fahrzeugs nach dem Oberbegriff des Anspruchs 1.

### Stand der Technik

Eine Hybrid-Fahrersitz-Zugmaschine gemäß dem Oberbegriff des Anspruchs 1 ist zum Beispiel aus der DE-A-4 321 768 bekannt.

Hybridfahrzeuge mit einem Verbrennungsmotor und beispielsweise einem Elektroantrieb vor allem für den gemischten Einsatz im Freien und in der Halle sind bereits seit langem gebräuchlich. Häufig ist die Antriebsart sowohl im Stand als auch während der Fahrt umschaltbar. Entsprechende Hybridfahrzeuge werden beispielsweise auf Flughäfen, insbesondere als Gepäckzugmaschine oder dergleichen, und in der Industrie in unterschiedlichsten Ausführungen eingesetzt.

Bei entsprechenden Fahrzeugen wird im Allgemeinen zwischen einem Schlepper und einem Plattformwagen unterschieden. Im Gegensatz zum Schlepper weist der Plattformwagen eine Plattform oder Ähnliches zum Aufnehmen von Gegenständen wie Gepäck, Industrieprodukte oder dergleichen auf.

Als Verbrennungsmotoren werden häufig Dieselmotoren verwendet, die im Freien in Betrieb sind, in geschlossenen Räumen wie z.B. in Industriehallen oder dergleichen treibt der Elektroantrieb das Hybridfahrzeug an, so dass keine schädlichen Abgasemissionen die in diesen Räumen arbeitenden Personen beeinträchtigen können.

Bei entsprechenden Hybridfahrzeugen wird beispielsweise der elektrische Antriebsmotor einerseits von Batterien bzw. Akkumulatoren mit elektrischer Energie als auch mittels einem vom Verbrennungsmotor angetriebenen Generator versorgt.

Nachteilig bei Fahrzeugen gemäß dem Stand der Technik ist, dass die Brennkraftmaschine, z.B. der Dieselmotor, regelmäßig in vergleichsweise kurzen Intervallen zeitaufwendig gewartet werden muss. Zudem ist die Brennkraftmaschine relativ störungsanfällig, so dass diese häufiger zu reparieren ist.

Entsprechende Fahrzeuge sind z.B. auf Flughäfen ca. 24 Stunden am Tag im Einsatz, so dass die verhältnismäßig aufwendige Wartung bzw. Reparatur entsprechender Brennkraftmaschinen zu einem vergleichsweise langen bzw. häufigen Ausfall des gesamten Fahrzeugs führt.

### Aufgabe und Vorteile der Erfindung

Aufgabe der Erfindung ist es demgegenüber, eine Hybrid-Fahrersitz-Zugmaschine insbesondere Hybridschlepper oder Hybridplattformwagen mit einem Antriebsmotor zum Antreiben wenigstens eines Laufrades der Hybrid-Fahrersitz-Zugmaschine, wobei eine Brennkraftmaschine und ein Energiewandler zur Energieversorgung des Antriebsmotors vorgesehen ist, vorzuschlagen, bei dem die Ausfallzeiten bedingt durch Wartung und/oder Reparatur, insbesondere der Brennkraftmaschine, deutlich reduziert werden.

Diese Aufgabe wird, ausgehend von einer Hybrid-Fahrersitz-Zugmaschine der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Hybrid-Fahrersitz-Zugmaschine dadurch aus, dass der Antriebsmotor in der Hybrid-Fahrersitz-Zugmaschine fest verbaut ist und die Brennkraftmaschine mit dem Energiewandler eine separate, vom Fahrzeug entfernbare Baueinheit bildet, wobei wenigstens zwischen dem Energiewandler und dem Antriebsmotor eine lösbare Kupplungsvorrichtung vorgesehen ist.

Mit Hilfe dieser Maßnahme kann die relativ häufig zu wartende bzw. störanfällige Brennkraftmaschine mit dem Energiewandler ohne großen Aufwand von der Hybrid-Fahrersitz-Zugmaschine entfernt und wieder verbunden werden. Für eine vergleichsweise aufwendige und zeitintensive Wartung bzw. für relativ zeitaufwendige Reparaturen kann gegebenenfalls eine zweite Baueinheit als Ersatz für die zu wartende bzw. zu reparierende Baueinheit ohne großen Aufwand eingesetzt bzw. vorgesehen werden, so dass die Hybrid-Fahrersitz-Zugmaschine bereits nach einer vergleichsweise kurzen Umbauphase wieder voll einsatzbereit ist.

In Kombination hierzu kann die Hybrid-Fahrersitz-Zugmaschine einen Energiespeicher zur Speicherung der Antriebsenergie des Antriebsmotors aufweisen, so dass die Hybrid-Fahrersitz-Zugmaschine wenigstens zeitweise mit beeinträchtigter oder ohne Brennkraftmaschine und/oder Energiewandler einsatzbereit bzw. fahrbereit ist. Hierdurch wird gewährleistet, dass beispielsweise bei einem Defekt der Brennkraftmaschine die Hybrid-Fahrersitz-Zugmaschine mit dem Antriebsmotor weiter betrieben werden und in vorteilhafter Weise zu einer Werkstätte oder dergleichen fahren kann. Anschließend wird gegebenenfalls die defekte Brennkraftmaschine gemäß der Erfindung vergleichsweise schnell durch ein entsprechendes Ersatzaggregat ausgewechselt. Hierdurch ist die Hybrid-Fahrersitz-Zugmaschine wieder uneingeschränkt verwendbar.

Vorteilhafterweise ist die erfindungsgemäße Kupplungsvorrichtung zwischen dem Energiewandler und dem Energiespeicher bzw. Akkumulator angeordnet, so dass eine Entkupplung der Energieerzeugung und des Energieverbrauchs durch den Antriebsmotor realisierbar ist. Hierdurch wird in vorteilhafter Weise eine Steuereinheit zur Steuerung bzw. Regelung des Antriebs besonders einfach realisierbar bzw. kann gegebenenfalls weitgehend entfallen.

Möglicherweise wird als Brennkraftmaschine ein Benzin- oder Gasmotor verwendet. Vorzugsweise ist die Brennkraftmaschine als Dieselbrennkraftmaschine ausgebildet.

Beispielsweise ist ein Hydraulikmotor bzw. eine Hydraulikpumpe vorgesehen. Gegebenenfalls ist der Energiewandler sowie der Antriebsmotor als Hydraulikmotor bzw. Hydraulikpumpe ausgebildet, so dass hierdurch wenigstens ein Laufrad der Hybrid-Fahrersitz-Zugmaschine angetrieben werden kann.

In einer vorteilhaften Weiterbildung der Erfindung umfasst der Antriebsmotor wenigstens einen Elektromotor. Entsprechende Elektromotoren z.B. Drehstrommotoren zeichnen sich insbesondere durch eine besonders geringe Störanfälligkeit und Wartung bei vergleichsweise hohem Wirkungsgrad aus.

Darüber hinaus kann zur weitgehend von der Brennkraftmaschine autarken Betriebsweise der Hybrid-Fahrersitz-Zugmaschine auf bereits bewährte Batterien bzw. Akkumulatoren zur Energiespeicherung zurückgegriffen werden. Entsprechendes trifft für einen als elektrischer Generator ausgebildeten Energiewandler zu.

In vorteilhafter Weise kann insbesondere mit handelsüblichen Standardkomponenten während dem Betrieb der Brennkraftmaschine gegebenenfalls überschüssige Antriebsenergie zum Aufladen der Energiespeicher verwendet werden. Hierdurch kann z.B. eine separate Beladung der Akkumulatoren in vorteilhafter Weise entfallen.

In einer vorteilhaften Variante der Erfindung ist die Kupplungsvorrichtung als Steck-Kupplungsvorrichtung mit wenigstens einem Stecker und einer Buchse ausgebildet. Entsprechend ausgebildete Steck-Kupplungsvorrichtungen ermöglichen eine besonders einfache bzw. schnelle Verbindung bzw. Lösung der Baueinheit vom bzw. zu der Hybrid-Fahrersitz-Zugmaschine. Hierbei kann auf bereits vorhandene, handelsübliche Standardkomponenten für entsprechende Stecker bzw. Buchsen zurückgegriffen werden, so dass eine vergleichsweise wirtschaftlich günstige Umsetzung der Erfindung realisierbar ist.

Vorteilhafterweise ist die Kupplungsvorrichtung als Energie-, Steuer- und/oder Abgaskupplung zum Verkuppeln von Energie-, Steuer- und/oder Abgasleitungen ausgebildet. Gegebenenfalls werden separate Energie-, Steuer- und Abgasleitungen vorgesehen. Im Allgemeinen werden zur Energieversorgung des Antriebsmotors vergleichsweise große elektrische Spannungen bzw. Ströme verwendet. Dagegen werden zur Steuerung bzw. Regelung der Fahrzeugkomponenten vergleichsweise geringe elektrische Spannungen bzw. Ströme verwendet, z.B. mit Steuerspannungen von ca. 12 oder 24 Volt. Hierfür können entsprechend dimensionierte, separate Leitungen bzw. Kupplungen vorgesehen werden.

In Abhängigkeit des verwendeten Antriebsmotors sind als Energieleitungen elektrische Stromkabel, Hydraulikschläuche oder dergleichen mit entsprechenden Kupplungen vorzusehen.

Gegebenenfalls ist der Stecker bzw. die Buchse unmittelbar an der Hybrid-Fahrersitz-Zugmaschine bzw. an der separaten, von der Hybrid-Fahrersitz-Zugmaschine entfernbaren Baueinheit angeordnet, so dass durch das Anbringen bzw. Montieren der Baueinheit am Antriebsteil der Hybrid-Fahrersitz-Zugmaschine die Kupplung erfolgt.

In einer vorteilhafter Weiterbildung der Erfindung umfasst die Kupplungsvorrichtung wenigstens eine Verbindungsleitung. Mit Hilfe einer entsprechenden Verbindungsleitung kann in bevorzugter Weise das Ankuppeln bzw. Entkuppeln einer von der Hybrid-Fahrersitz-Zugmaschine unter Umständen etwas beabstandeten bzw. entfernten Baueinheit erfolgen. Hierdurch kann beispielsweise das Bedienungspersonal vorteilhaft die Kupplung herstellen.

Vorzugsweise umfasst die Baueinheit einen separaten Tragrahmen. Hiermit wird eine besonders stabile und selbsttragende Baueinheit realisierbar. Am Tragrahmen wird in vorteilhafter Weise die Brennkraftmaschine mit dem Energiewandler angeordnet bzw. fixiert.

In einer besonderen Ausführungsform der Erfindung ist wenigstens eine Aufnahmevorrichtung zum Aufnehmen eines Sockelelementes des Tragrahmens vorgesehen. Beispielsweise weist die Aufnahmevorrichtung der Hybrid-Fahrersitz-Zugmaschine eine schräge Fläche bzw. ein gegebenenfalls schräg gestelltes Führungselement auf, entlang dem das Sockelelement des Tragrahmens vorteilhaft gleiten kann bzw. eingeführt wird. Hierdurch wird eine besonders einfache Einführung bzw. Aufnahme der erfindungsgemäßen Baueinheit am Fahrgestell der Hybrid-Fahrersitz-Zugmaschine verwirklicht.

Vorzugsweise ist wenigstens ein Fixierelement zum Fixieren der Baueinheit vorgesehen. Hiermit wird gewährleistet, dass die Baueinheit vorteilhaft an der Hybrid-Fahrersitz-Zugmaschine fixierbar ist, so dass die Baueinheit selbst während der Fahrt weitgehend fest an der Hybrid-Fahrersitz-Zugmaschine angebracht ist. Beispielsweise ist das Fixierelement als Bolzen, Stift, Schraube, Klemmelement oder dergleichen ausgebildet.

Vorteilhafterweise weist die Baueinheit wenigstens ein Befestigungselement zum Befestigen an einer Hebevorrichtung auf. Möglicherweise ist das Befestigungselement als Befestigungsöse oder dergleichen ausgebildet. Ein entsprechendes Befestigungselement ermöglicht in besonders einfacher Weise ein vergleichsweise schnelles Abnehmen bzw. Auswechseln der Baueinheit mittels einer Hebevorrichtung, z.B. Gabelstapler, Montagekran oder dergleichen.

In einer besonderen Variante der Erfindung weist die Baueinheit wenigstens ein Speicherelement zum Speichern eines Kraftstoffs der Brennkraftmaschine und/oder eine Anlassvorrichtung zum Starten der Brennkraftmaschine auf. Hiermit ist eine weitgehend autarke Betriebsweise der Baueinheit gemäß der Erfindung realisierbar, so dass in vorteilhafter Weise die Wartung bzw. Reparatur der vergleichsweise störungsanfälligen Komponenten der Baueinheit erfolgen kann. Hierbei kann die weitgehend autarke Baueinheit bzw. deren Funktionsfähigkeit nahezu vollständig überprüft bzw. durchgecheckt werden.

Vorzugsweise weist die Anlassvorrichtung eine Batterie bzw. einen Akkumulator zum Speichern elektrischer Energie auf. Häufig sind wenigstens zwei separate Batterien bzw. Akkumulatoren vorgesehen, wobei ein Akkumulator zum Anlassen bzw. Starten der Brennkraftmaschine und wenigstens der zweite Akkumulator zur Energieversorgung des Antriebsmotors vorgesehen ist.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: in schematischer Seitenansicht eine erfindungsgemäße Hybrid-Fahrersitz-Zugmaschine mit entkuppelter Baueinheit und
- Figur 2: in schematischer Seitenansicht eine Hybrid-Fahrersitz-Zugmaschine mit angekuppelter Baueinheit.

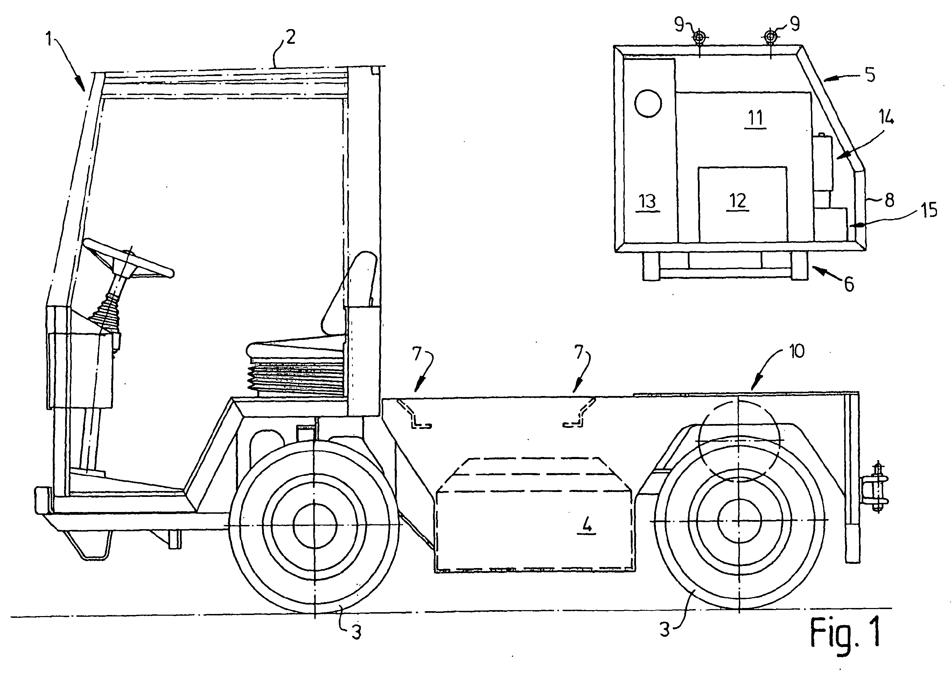

In Figur 1 ist eine erfindungsgemäße Hybrid-Fahrersitz-Zugmaschine (HFZ) 1 dargestellt. Entsprechende Hybrid-Fahrersitz-Zugmaschinen 1 werden beispielsweise als Gepäcktransporter 1 auf Flughäfen eingesetzt. Darüber hinaus sind entsprechende Hybrid-Fahrersitz-Zugmaschinen, ohne Beschränkung des Einsatzzweckes, beispielsweise als fahrbare Fluggasttreppe oder dergleichen denkbar.

Die Hybrid-Fahrersitz-Zugmaschine 1 weist eine Führerkabine 2 auf, von der aus ein nicht näher dargestellter Fahrer die Hybrid-Fahrersitz-Zugmaschine 1 lenkt bzw. steuert.

Insbesondere ein hinteres Laufrad 3 wird mittels einem Elektromotor 10 mit einem Getriebe angetrieben. Zur Energieversorgung des Elektromotors 10 weist die Hybrid-Fahrersitz-Zugmaschine 1 einen Batterieblock 4 auf. Hierdurch ist die Hybrid-Fahrersitz-Zugmaschine 1 bereits fahrbereit. D.h. ein Antriebsteil der Hybrid-Fahrersitz-Zugmaschine 1 ist als voll funktionsfähiges Elektrofahrzeug 1 ausgebildet.

Eine Diesel-Generator-Einheit. 5 umfasst in schematisch dargestellter Weise insbesondere einen Dieselmotor 11, einen elektrischen Generator 12, einen Dieseltank 13 und einen Anlasser 14 mit einer Starterbatterie 15. Die Diesel-Generator-Einheit 5 ist insbesondere zur Energieversorgung des Elektromotors 10 bzw. zum Aufladen des Batterieblocks 4 ausgebildet, so dass diese vollständig autark betrieben, gewartet bzw. repariert werden kann.

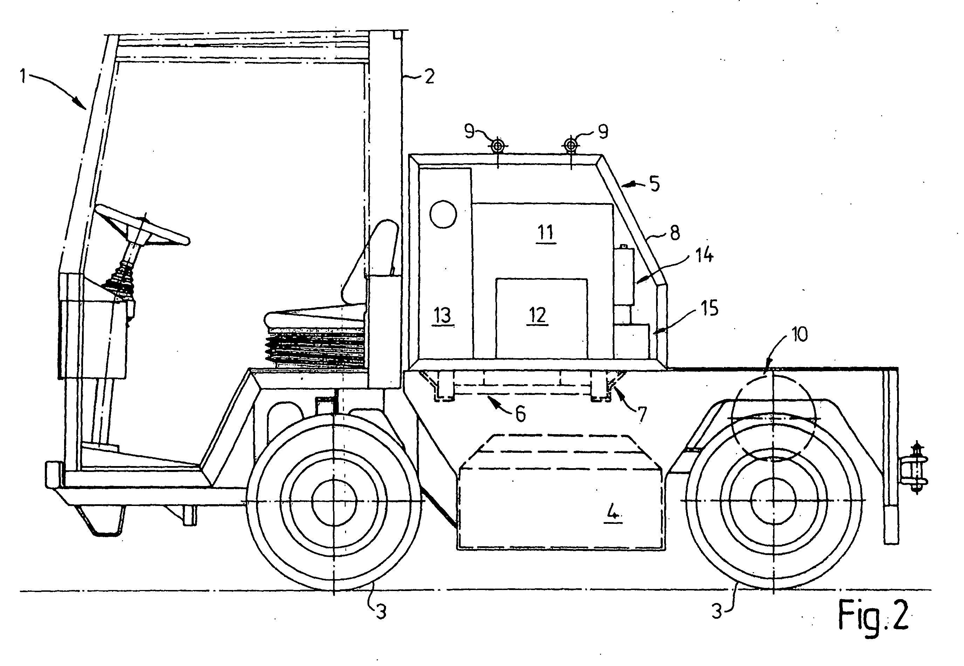

Die Diesel-Generator-Einheit 5 wird mittels einem Sockel 6 in eine Aufnahme 7 der Hybrid-Fahrersitz-Zugmaschine 1 eingeführt. Gegebenenfalls ohne weitere Fixierung ist die Diesel-Generator-Einheit 5 aufgrund des vergleichsweise großen Eigengewichtes und der vorteilhaft ausgebildeten Aufnahme 7 bzw. entsprechenden Sockels 6 gemäß Figur 2 mit der Hybrid-Fahrersitz-Zugmaschine 1 fest verbunden.

Gemäß der Erfindung sind in nicht näher dargestellter Weise Kupplungen zum Verkuppeln von Energie, Steuer- und/oder Abgasleitungen vorgesehen. Die Kupplung kann beispielsweise lediglich durch das Einführen der Diesel-Generator-Einheit 5 in die Aufnahme 7 realisiert werden, wobei in vorteilhafter Weise entsprechende Stecker in dafür vorgesehene Buchsen eingeführt werden.

Ohne nähere Darstellung kann bei der in Figur 1 dargestellten Anordnung bzw. Stellung der Diesel-Generator-Einheit 5 diese durch ein Bedienungspersonal mittels einer bzw. mehrerer, entsprechend lang ausgebildeten Verbindungsleitungen an den Antriebsteil der Hybrid-Fahrersitz-Zugmaschine 1 angekuppelt werden. In diesem Fall ist die Aufnahme 7 lediglich als rein mechanische Aufnahme bzw. Arretierung der Diesel-Generator-Einheit 5 ausgebildet.

Die Diesel-Generator-Einheit 5 umfasst insbesondere einen Tragrahmen 8, der mehrere Ösen 9 aufweist. In nicht näher dargestellter Weise kann mittels der Ösen 9 das Aufbringen bzw. Abheben und/oder Austauschen der Diesel-Generator-Einheit 5 mittels einem Gabelstapler, einem Montagekran oder dergleichen erfolgen.

Bei einem Störfall oder während der Wartung der Diesel-Generator-Einheit 5 kann eine Ersatzeinheit 5 von der Hybrid-Fahrersitz-Zugmaschine 1 aufgenommen werden, so dass dieses ohne nennenswerte Wartezeit wieder betriebsbereit ist. Gemäß der Erfindung kann ein Austausch einer Diesel-Generator-Einheit 5 durch eine Ersatzeinheit 5 in ca. 5 Minuten von einem Fahrer mit lediglich geringen technischen Kenntnissen erfolgen. Im Gegensatz hierzu wird gemäß dem Stand der Technik während der Wartung bzw. der Reparatur des Dieselmotors 11 die Hybrid-Fahrersitz-Zugmaschine 1 relativ lang stillgelegt, so dass ein vergleichsweise großer wirtschaftlicher Ausfall entsteht. Z.B. fallen Hybridschlepper gemäß dem Stand der Technik auf Flughäfen ca. 30 Tage im Jahr für Wartung- und Reparaturarbeiten aus.

In vorteilhafter Weise können beispielsweise auf einem Flughafen oder in einer Industrieanlage mehrere Hybrid-Fahrersitz-Zugmaschinen vorhanden sein, wobei beispielsweise zusätzlich ein oder zwei Ersatzeinheiten 5 für den Austausch vorrätig sind. Hierdurch wird erreicht, dass alle Hybrid-Fahrersitz-Zugmaschinen 1 eines entsprechenden Fuhrparkes nahezu durchgehend fahrbereit bzw. einsatzfähig sind. Ein Motor 5 kann in vorteilhafter Weise unabhängig von der Hybrid-Fahrersitz-Zugmaschine 1 in einer Werkstatt oder dergleichen vom entsprechenden Fachpersonal gewartet bzw. repariert werden.

Generell kann ein Hinterrad- bzw. ein Vorderrad- als auch ein Allradantrieb der Hybrid-Fahrersitz-Zugmaschine 1 realisiert werden.

### Bezugszeichenliste:

- 1: Hybrid-Fahrersitz-Zugmaschine
- 2: Führerkabine
- 3: Laufrad
- 4: Batterieblock
- 5: Diesel-Generator-Einheit
- 6: Sockel
- 7: Aufnahme
- 8: Tragrahmen
- 9: Öse
- 10: Elektromotor
- 11: Dieselmotor
- 12: Generator
- 13: Tank
- 14: Anlasser
- 15: Batterie

## Patentansprüche

1. Hybrid-Fahrersitz-Zugmaschine (1) mit einem Elektromotor (10) zum Antreiben wenigstens eines Laufrades (3) der Hybrid-Fahrersitz-Zugmaschine (1), wobei eine Brennkraftmaschine (11) mit einem elektrischen Generator (12) und einem elektrischen Speichermittel (4) zur Energieversorgung des Elektromotors (10) vorgesehen ist, wobei die Brennkraftmaschine (11) mit dem Generator (12) eine separate, von der Hybrid-Fahrersitz-Zugmaschine (1) entfernbare Generatoreinheit (5) bildet und der Elektromotor (10) in der Hybrid-Fahrersitz-Zugmaschine (1) fest verbaut ist, **dadurch gekennzeichnet, dass** zwischen dem Generator (12) und dem Elektromotor (10) eine lösbare Kupplungsvorrichtung (6, 7) vorgesehen ist und dass das elektrische Speichermittel (4) sowohl für den Hybridbetrieb mit Generatoreinheit (5) als auch für den reinen elektrischen Betrieb bei entfernter Generatoreinheit (5) vorgesehen ist.

2. Hybrid-Fahrersitz-Zugmaschine (1) nach Anspruch 1, **dadurch gekennzeichnet, dass** die Brennkraftmaschine (11) als Dieselbrennkraftmaschine (11) ausgebildet ist.

3. Hybrid-Fahrersitz-Zugmaschine (1) nach einem der vorgenannten Ansprüche, **dadurch gekennzeichnet, dass** die Kupplungsvorrichtung (6, 7) als Steck-Kupplungsvorrichtung (6, 7) mit wenigstens einem Stecker und einer Buchse ausgebildet ist.

4. Hybrid-Fahrersitz-Zugmaschine (1) nach einem der vorgenannten Ansprüche, **dadurch gekennzeichnet, dass** die Kupplungsvorrichtung (6, 7) als Energie-, Steuer- und/oder Abgaskupplung zum Verkuppeln von Energie-, Steuer- und/oder Abgasleitungen ausgebildet ist.

5. Hybrid-Fahrersitz-Zugmaschine (1) nach einem der vorgenannten Ansprüche, **dadurch gekennzeichnet, dass** die Kupplungsvorrichtung (6, 7) wenigstens eine Verbindungsleitung umfasst.

6. Hybrid-Fahrersitz-Zugmaschine (1) nach einem der vorgenannten Ansprüche, **dadurch gekennzeichnet, dass** die Baueinheit (5) einen separaten Tragrahmen (8) umfasst.

7. Hybrid-Fahrersitz-Zugmaschine (1) nach einem der vorgenannten Ansprüche, **dadurch gekennzeichnet, dass** wenigstens eine Aufnahmevorrichtung (7) zum Aufnehmen eines Sockelelements (6) des Tragrahmens (8) vorgesehen ist.

8. Hybrid-Fahrersitz-Zugmaschine (1) nach Anspruch 7, **dadurch gekennzeichnet, dass** die Aufnahmevorrichtung (7) wenigstens ein Führungselement (7) umfasst.

9. Hybrid-Fahrersitz-Zugmaschine (1) nach einem der vorgenannten Ansprüche, **dadurch gekennzeichnet, dass** wenigstens ein Fixierelement zum Fixieren der Baueinheit (5) vorgesehen ist.

10. Hybrid-Fahrersitz-Zugmaschine (1) nach einem der vorgenannten Ansprüche, **dadurch gekennzeichnet, dass** die Baueinheit (5) wenigstens ein Befestigungselement (9) zum Befestigen an einer Hebevorrichtung aufweist.

11. Hybrid-Fahrersitz-Zugmaschine (1) nach einem der vorgenannten Ansprüche, **dadurch gekennzeichnet, dass** die Baueinheit (5) wenigstens ein Speicherelement (13) zum Speichern eines Kraftstoffs der Brennkraftmaschine (11) aufweist.

12. Hybrid-Fahrersitz-Zugmaschine (1) nach einem der vorgenannten Ansprüche, **dadurch gekennzeichnet, dass** die Baueinheit (5) wenigstens eine Anlassvorrichtung (14, 15) zum Starten der Brennkraftmaschine (11) aufweist.

## Claims

1. Hybrid driver seat traction vehicle (1) comprising an electric motor (10) for driving at least one running wheel (3) of the hybrid driver seat traction vehicle (1), an internal combustion engine (11) being provided with an electric generator (12) and an electric storage means (4) for supplying energy to the electric motor (10), the internal combustion engine (11) forming with the generator (12) a separate generator unit (5) which can be removed from the hybrid driver seat traction vehicle (1) and the electric motor (10) being securely fixed in the hybrid driver seat traction vehicle (1), **characterised in that** between the generator (12) and the electric motor (10) a detachable coupling device (6, 7) is provided and **in that** the electric storage means (4) is provided for hybrid operation with the generator unit (5) and also for mere electric operation when the generator unit (5) has been removed.

2. Hybrid driver seat traction vehicle (1) according to claim 1, **characterised in that** the internal combustion engine (11) is constructed as a diesel combustion engine (11).

3. Hybrid driver seat traction vehicle (1) according to either of the preceding claims, **characterised in that** the coupling device (6, 7) is constructed as a plug-type coupling device (6, 7) having at least a plug and a socket.

4. Hybrid driver seat traction vehicle (1) according to any one of the preceding claims, **characterised in that** the coupling device (6, 7) is constructed as a power, control and/or exhaust coupling for coupling power control and/or exhaust lines.

5. Hybrid driver seat traction vehicle (1) according to any one of the preceding claims, **characterised in that** the coupling device (6, 7) comprises at least one connection line.

6. Hybrid driver seat traction vehicle (1) according to any one of the preceding claims, **characterised in that** the modular unit (5) comprises a separate support frame (8).

7. Hybrid driver seat traction vehicle (1) according to any one of the preceding claims, **characterised in that** at least one receptacle (7) is provided for receiving a base element (6) of the support frame (8).

8. Hybrid driver seat traction vehicle (1) according to claim 7, **characterised in that** the receptacle (7) comprises at least one guide element (7).

9. Hybrid driver seat traction vehicle (1) according to any one of the preceding claims, **characterised in that** at least one fixing element is provided for fixing the modular unit (5).

10. Hybrid driver seat traction vehicle (1) according to any one of the preceding claims, **characterised in that** the modular unit (5) has at least one fastening element (9) for fastening to a lifting device.

11. Hybrid driver seat traction vehicle (1) according to any one of the preceding claims, **characterised in that** the modular unit (5) has at least one storage element (13) for storing a fuel for the internal combustion engine (11).

12. Hybrid driver seat traction vehicle (1) according to any one of the preceding claims, **characterised in that** the modular unit (5) has at least one starting device (14, 15) for starting the internal combustion engine (11).

## Revendications

1. Véhicule tracteur autoporteur hybride (1) comportant un moteur électrique (10) pour l'entraînement d'au moins une roue mobile (3) du véhicule tracteur autoporteur hybride (1), un moteur à combustion interne (11) étant prévu avec un générateur électrique (12) et un moyen d'accumulation électrique (4) pour l'alimentation en énergie du moteur électrique (10), le moteur à combustion interne (11) formant avec le générateur (12) une unité de générateur (5) séparée pouvant être retirée du véhicule tracteur autoporteur hybride (1) et le moteur électrique (10) étant fixement monté dans le véhicule tracteur autoporteur hybride (1),
**caractérisé en ce que**, entre le générateur (12) et le moteur électrique (10), il est prévu un dispositif d'accouplement amovible (6, 7) et **en ce que** le moyen d'accumulation électrique (4) est prévu aussi bien pour le fonctionnement hybride avec l'unité de générateur (5) qu'également pour le fonctionnement purement électrique lorsque l'unité de générateur (5) est retirée.

2. Véhicule tracteur autoporteur hybride (1) selon la revendication 1,
**caractérisé en ce que** le moteur à combustion interne (11) est réalisé en tant que moteur à combustion interne diesel (11).

3. Véhicule tracteur autoporteur hybride (1) selon l'une des revendications précédentes,
**caractérisé en ce que** le dispositif d'accouplement (6, 7) est réalisé en tant que dispositif d'accouplement par enfichage (6, 7) avec au moins un connecteur mâle et une douille.

4. Véhicule tracteur autoporteur hybride (1) selon l'une des revendications précédentes,
**caractérisé en ce que** le dispositif d'accouplement (6, 7) est réalisé en tant qu'accouplement d'énergie, de commande et/ou d'échappement pour l'accouplement des conduites d'énergie, de commande et/ou d'échappement.

5. Véhicule tracteur autoporteur hybride (1) selon l'une des revendications précédentes,
**caractérisé en ce que** le dispositif d'accouplement (6, 7) comprend au moins une conduite de liaison.

6. Véhicule tracteur autoporteur hybride (1) selon l'une des revendications précédentes,
**caractérisé en ce que** l'unité modulaire (5) comprend un cadre porteur (8) séparé.

7. Véhicule tracteur autoporteur hybride (1) selon l'une des revendications précédentes,
**caractérisé en ce qu'**il est prévu au moins un dispositif de réception (7) pour recevoir un élément de socle (6) du cadre porteur (8).

8. Véhicule tracteur autoporteur hybride (1) selon la revendication 7,
**caractérisé en ce que** le dispositif de réception (7) comprend au moins un élément de guidage (7).

9. Véhicule tracteur autoporteur hybride (1) selon l'une des revendications précédentes,
**caractérisé en ce qu'**il est prévu au moins un élément de blocage pour le blocage de l'unité modulaire (5).

10. Véhicule tracteur autoporteur hybride (1) selon l'une des revendications précédentes,
**caractérisé en ce que** l'unité modulaire (5) présente au moins un élément de fixation (9) pour la fixation sur un dispositif de levage.

11. Véhicule tracteur autoporteur hybride (1) selon l'une des revendications précédentes,
**caractérisé en ce que** l'unité modulaire (5) présente au moins un élément de réservoir (13) afin d'emmagasiner le carburant du moteur à combustion interne (11).

12. Véhicule tracteur autoporteur hybride (1) selon l'une des revendications précédentes,
**caractérisé en ce que** l'unité modulaire (5) présente au moins un dispositif de démarrage (14, 15) afin de démarrer le moteur à combustion interne (11).
